# EUROPÄISCHE PATENTANMELDUNG

(11) **EP 4 818 691 A1**
(43) Veröffentlichungstag der Anmeldung: **07.10.2026**
(21) Anmeldenummer: 26163716.9
(22) Anmeldetag: 10.03.2026
(51) Int. Cl.: G01N 27/28

(54) **MESSELEKTRODENEINHEIT ZUM EINBAU IN DIE WANDUNG EINES BEHÄLTERS EINER THERMOCHEMISCHEN ANLAGE UND IHRE VERWENDUNG FÜR ELEKTROCHEMISCHE MESSUNGEN**

(30) Priorität: 02.04.2025 DE 102025112905
(71) Anmelder: Deutsches Zentrum für Luft- und Raumfahrt e.V., 53227 Bonn (DE)
(72) Erfinder: Braun, Markus, 70569 Stuttgart (DE)
(74) Vertreter: Fleck, Hermann-Josef

(57) **Zusammenfassung**

Die Erfindung bezieht sich auf eine Messelektrodeneinheit (1) mit einem um eine Längsachse (A) umlaufenden länglichen Aufbau zum Einbau in die Wandung eines Behälters oder einer Rohrleitung zur Messung an darin enthaltenen Arbeitsmedien, insbesondere Salzschmelzen, mit einem Befestigungsabschnitt zum Befestigen der Messelektrodeneinheit (1) an der Wandung und mindestens einer koaxial zusammengesetzten Baugruppe aus einem in das Arbeitsmedium eintauchbaren am vorderen Endbereich angebrachten Messstück (3), einem dieses im eingebauten Zustand gegenüber der Wandung elektrisch isolierenden Isolationskörper (4), und einer mit dem Messstück (3) elektrisch verbundenen Signalableitung zum Weiterleiten von Messsignalen an eine Auswerteeinrichtung. Vorteile für den Einbau an Behältern oder Rohrleitungen mit Salzschmelzen bei hoher Temperatur werden dadurch erzielt, dass der Befestigungsabschnitt als Befestigungsadapter (6) für jede Baugruppe mit einer um die oder - bei mehreren Baugruppen parallel zu der Längsachse (A) umlaufenden, sich mit einer radialen Komponente erstreckenden, insbesondere konusförmigen, Adapterdichtfläche (63) ausgebildet ist, die mit einer zugekehrten umlaufenden, eine radiale Komponente aufweisenden, insbesondere konusförmigen, komplementären ersten Dichtfläche (80) eines Zwischenstücks (8) der jeweiligen Baugruppe oder unmittelbar mit einer ersten Isolationskörperdichtfläche (43) formschlüssig, relativ verschiebbar dichtend zusammenwirkt (Fig. 1).

## Beschreibung

Die Erfindung bezieht sich auf eine Messelektrodeneinheit mit einem um eine Längsachse umlaufenden länglichen Aufbau zum Einbau in die Wandung eines Behälters oder einer Rohrleitung zur Messung an darin enthaltenen Arbeitsmedien, insbesondere Salzschmelzen, mit einem Befestigungsabschnitt zum Befestigen der Messelektrodeneinheit an der Wandung und mindestens einer koaxial zusammengesetzten Baugruppe aus einem in das Arbeitsmedium eintauchbaren am vorderen Endbereich angebrachten Messstück, einem dieses im eingebauten Zustand gegenüber der Wandung elektrisch isolierenden Isolationskörper, und mit einer mit dem Messstück elektrisch verbundenen Signalableitung zum Weiterleiten von Messsignalen an eine Auswerteeinrichtung. Ferner bezieht sich die Erfindung auf die Verwendung einer solcher Messelektrodeneinheit für elektrochemische Messungen.

Eine Messelektrodeneinheit dieser Art ist in der DE 29 10 811 C2 gezeigt. Eine Stromzuleitereinrichtung einer Elektrode umfasst hierbei ein durch eine Wandung hindurchgehendes, in eine Bohrung der Elektrode hineinragendes Graphitrohr sowie ein durch die Wandung hindurchgeführtes, aus dichtem, elektrisch nicht leitendem thermischem Material bestehendes Schutzrohr. Das das Graphitrohr umgebende Schutzrohr ist an einem Ende in der Elektrode dicht eingebettet. Zur Halterung und Abdichtung der Stromzuleitereinrichtung an der Wandung ist eine Stopfbüchse angebracht, die über Packungen das keramische Schutzrohr und das Graphitrohr dicht umschließt.

Die DE 10 2008 046 118 A1 zeigt eine weitere Messelektrodeneinheit zur Durchführung von In-situ-Messungen an in Rohren oder Behältern strömenden fluiden Arbeitsmedien, insbesondere in heißen Abgasen einer Verbrennungsanlage zur Erfassung einer auf das korrosive Fluid zurückzuführenden Korrosionsrate. Die als Korrosionstestsonde ausgebildete Messelektrodeneinheit umfasst eine ca. 2 m lange Trägerlanze und einen daran über einen Abstandshalter angeschlossenen Sondenkopf, wobei der Abstandshalter die anschließend angeordneten Messelektroden des Sondenkopfes thermisch von der Trägerlanze entkoppelt. In der Trägerlanze ist eine Kühleinrichtung mit einer Luft- und Wasserkühlung vorgesehen, über die die Trägerlanze und der Sondenkopf bei der Messung gekühlt werden. Um das Sondeninnere gegen das Eindringen korrosiver Gase abzudichten, ist in dem Sondenkopf eine Zugeinrichtung angeordnet, welche die Messelektroden und die sie voneinander elektrisch isolierenden Isolierteile unter Zugspannung setzt und diese dadurch gegeneinanderdrückt. Der Sondenkopf ist zylindrisch ausgebildet und die Zugeinrichtung weist eine xial verlaufende Zugstange auf, die sich lediglich über die Länge des Sondenkopfes erstreckt und an ihrem der Trägerlanze zugekehrten einen Ende mit einer scheibenförmigen Zugplatte und an ihrem anderen Ende mit einem scheibenförmigen Hut am Ende des Sondenkopfes verschraubt ist. Zum Einbau einer Messelektrodeneinheit in die Rohr- oder Behälterwandung und die damit zusammenhängende Problematik sind keine Ausführungen gemacht.

Die DE 10 2023 109 549 A1 zeigt ein Verfahren und eine Vorrichtung zur Detektion von Verunreinigungen in flüssigen Nitratsalzschmelzen mit einer Messzelle, die eine Elektrodenanordnung umfasst.

In der DD 201 838 ist eine aus mehreren Teilen zusammengesetzte Elektrode für die Schmelzflusselektrolyse gezeigt.

Die DD 55 323 zeigt eine Elektrode zur Anwendung in einem elektrolytischen Verfahren, bestehend aus einem Kern eines filmbildenden Metalls und einer gegen den Elektrolyten und Elektrolyseprodukte widerstandsfähigen Schicht.

Elektrochemische Messungen an Arbeitsmedien thermischer Wärmespeichersysteme, insbesondere an geschmolzenen anorganischen Salzen, die üblicherweise im Bereich von 280 °C bis 800 °C liegen, benötigen entsprechend widerstandsfähige Elektroden, die fluiddicht und elektrisch isoliert durch die Wandung des das Arbeitsmedium enthaltenden Behälters oder der Rohrleitung eingeführt werden müssen. Die elektrische Isolation kann bei den Temperaturen, bei denen solche thermische Messspeichersysteme arbeiten, nur mit entsprechend widerstandsfähigem Isolationsmaterial, insbesondere isolierender Keramik erreicht werden. Da die Wandungen betreffender Behälter und Rohrleitungen aus Stählen bestehen, muss eine fluid- und druckdichte Keramik-Metall-Verbindung hergestellt werden, womit erheblicher Aufwand und funktionstechnische Probleme verbunden sind.

Bekannt ist, Keramik-Metall-Verbindungen über mehrstufige Lötverfahren oder Aktivlöten herzustellen. Diese Verfahren sind sehr aufwendig, wobei Lote zum Einsatz kommen, die sich in ihrer chemischen Zusammensetzung vom Grundmetall, welches mit der Keramik verbunden wird, unterscheiden. Dies ist jedoch beim Herstellen von Elektroden ein Problem, da das Lot parasitäre elektrische Spannungen erzeugen kann, die zu Messfehlern führen und die Messung unbrauchbar machen können. Auch kann das Lot selektiv aufgelöst werden, wodurch die Elektroden zerstört werden können. Zudem ist die Kompatibilität des Lots mit der Salzschmelze in vielen Fällen nicht gegeben oder unzureichend. Weiterhin ist der Unterschied in der Wärmeausdehnung von Metall und Keramik störend, wodurch die Auswahl einsetzbarer Metalle eingeschränkt ist.

Denkbar ist, den Durchführungsbereich durch die Wandung des Behälters oder der Rohrleitung soweit abzusetzen, dass dieser kalt genug ist, um die Durchführung mit geeigneten Elastomeren zu dichten. Hierbei muss jedoch die elektrische Anbindung auf der gesamten Länge zwischen der Dichtung bis zur eigentlichen Messstelle aus dem Elektrodenmaterial ausgeführt werden. Dies ist z. B. bei Platin, wie es in Nitratsalzsystemen zum Einsatz kommt, sehr teuer.

Der vorliegenden Erfindung liegt die Aufgabe zugrunde, eine Messelektrodeneinheit der eingangs genannten Art bereitzustellen, die insbesondere auch bei Einwirkung hoher Temperaturen im Übergangsbereich zwischen dem elektrisch isolierenden Körper und dem Einbaubereich in der Wandung eine hohe Widerstandsfähigkeit bietet. Ferner soll die Verwendung einer solchen Messelektrodeneinheit für Einsatzgebiete angegeben werden, in denen die Widerstandsfähigkeit der Verbindung im Durchführungsbereich von Bedeutung ist.

Diese Aufgabe wird bei einer Messelektrodeneinheit mit den im Anspruch 1 angegebenen Merkmalen erfindungsgemäß gelöst. Dabei ist im Zusammenhang mit den im Oberbegriff angegebenen Merkmalen weiterhin vorgesehen, dass der Befestigungsabschnitt als Befestigungsadapter für jede Baugruppe mit einer um die oder - insbesondere bei mehreren Baugruppen - parallel zu der Längsachse umlaufenden, sich mit einer radialen Komponente erstreckenden, insbesondere konusförmigen, Adapterdichtfläche ausgebildet ist, die mit einer zugekehrten umlaufenden, eine radiale Komponente aufweisenden, insbesondere konusförmigen, komplementären ersten Dichtfläche eines Zwischenstücks der jeweiligen Baugruppe oder unmittelbar mit einer, insbesondere konusförmigen, zweiten Isolationskörperdichtfläche formschlüssig, relativ verschiebbar dichtend zusammenwirkt, wobei bei Vorhandensein des Zwischenstücks dieses an seinem von der zugeordneten Adapterdichtfläche abgelegenen Endbereich mit einer der zweiten Isolationskörperdichtfläche zugekehrten, umlaufenden, eine radiale Komponente aufweisenden, insbesondere konusförmigen, komplementären zweiten Dichtfläche relativ verschiebbar dichtend zusammenwirkt, sodass das Messstück im Einbauzustand von der Wandung auch bei sich ändernder Temperatur isoliert bleibt, wobei der Isolationskörper und der Befestigungsabschnitt sowie gegebenenfalls das Zwischenstück mittels einer Presskraft, insbesondere Federkraft, in Richtung der Längsachse im Bereich ihrer aneinanderliegenden Dichtflächen dichtend zusammengehalten sind.

Durch die so gestalteten flächigen Übergangsbereiche zwischen dem Isolationskörper und dem Durchführungsbereich zur Wandung eines Behälters oder einer Rohrleitung hin können negative Einflüsse unterschiedlicher Wärmeausdehnung auf die Dichtwirkung zwischen dem Isolationskörper und dem in der Regel metallischen Durchführungsbereich zur Wandung hin ohne stoffschlüssige Verbindung wie Lötverbindung und damit ohne die Gefahr von Beschädigungen der Verbindung mit hoher Zuverlässigkeit und dabei ohne großen Aufwand vermieden werden. Auch wird die Auswahl von für die Funktion der Elektrode vorteilhaft geeigneten Materialien durch den erfindungsgemäßen Aufbau praktisch nicht eingeschränkt. Dehnt sich das Metall des Befestigungsadapters stärker aus als der Isolationskörper, verschiebt es sich aufgrund der in genannter Weise gestalteten Berührungsflächen unter Wirkung der Presskraft axial, wobei die Dichtflächen dichtend aneinander gehalten bleiben. Umgekehrt bleibt die Wirkung infolge der aufrechterhaltenden Presskraft beim Zusammenziehen des Metalls des Befestigungsadapters weiterhin bestehen. Der zusätzliche Einsatz des Zwischenstücks bietet eine verbesserte Möglichkeit der Materialanpassung zwischen Isolationskörper und Befestigungsadapter, um eine hohe Dichtwirkung zwischen den jeweiligen Dichtflächen sicherzustellen.

Entsprechend vorteilhaft kann mittels der in genannter Weise ausgebildeten Dichtfläche zwischen dem Isolationskörper und dem Messstück eine hohe Dichtwirkung auch bei hohen Temperaturen aufrechterhalten werden, wenn vorgesehen ist, dass der Isolationskörper in seinem dem Messstück zugekehrten Endbereich mit einer ersten Isolationskörperdichtfläche versehen ist, die mit einer zugekehrten, umlaufenden, eine radiale Komponente aufweisenden, insbesondere konischen, komplementären Messstückdichtfläche relativ verschiebbar dichtend zusammenwirkt, wobei auch das Messstück und der Isolationskörper mittels einer Presskraft, insbesondere Federkraft, in Richtung der Längsachse dichtend zusammengehalten sind. Auch bietet diese dichtende Anlage der beiderseitigen Dichtflächen zwischen dem Isolationskörper und dem Messstück ohne stoffschlüssige Verbindung Montagevorteile. Denkbar (aber erfindungsgemäß wegen ungünstiger Auswirkung von Wärmeeinflüssen nicht bevorzugt) wäre indes, dort eine feste, z. B. stoffschlüssige, Verbindung vorzusehen.

Eine für den Aufbau und die Funktionsweise vorteilhafte Ausgestaltung der Messelektrodeneinheit besteht darin, dass für die oder gegebenenfalls für jede weitere Baugruppe der aus elektrisch leitendem Material, insbesondere Metall, hergestellte Befestigungsadapter, der Isolationskörper und gegebenenfalls das Zwischenstück von einer Zugstange relativ zu dieser in Richtung der Längsachse verstellbar und elektrisch isoliert durchsetzt sind, an deren vorderem Endbereich das Messstück befestigt ist und die mit ihrem anderen Ende in den oder über den Befestigungsadapter hinaus ragt, und dass die Presskraft zum dichtenden Zusammenhalten des Befestigungsadapters, gegebenenfalls des Zwischenstücks, und des Isolationskörpers sowie - bei entsprechender Ausbildung der Dichtflächen zwischen Isolationskörper und Messstück - auch des Messtücks mittels einer Federanordnung aufgebracht ist, die sich mit ihrem einen Ende an einem Anschlag am (von dem Messstück abgewandten) hinteren Endbereich der Zugstange und andererseits an dem Befestigungsadapter oder einem sich an diesen nach hinten anschließenden Abstandsteil abstützt. Durch die Federanordnung wird die Presskraft sowohl bei Ausdehnung des metallischen Befestigungsadapters gegenüber dem Isolationskörper infolge von Wärmeeinfluss als auch bei einem Zusammenziehen des Befestigungsadapters gegenüber dem Isolationskörper aufrechterhalten.

Eine für die Funktion und den Aufbau vorteilhafte Ausführungsvariante besteht darin, dass (für jede Baugruppe) die Adapterdichtfläche mittels eines Innenkonus, die erste und die zweite Dichtfläche des Zwischenstücks mittels Außenkonusse, die gegebenenfalls vorhandene erste und die zweite Isolationskörperdichtfläche mittels Innenkonusse und die gegebenenfalls vorhandene Messstückdichtfläche mittels eines Außenkonus gebildet sind.

Eine für die Funktion der Dichtung zwischen dem Messstück und dem Isolationskörper vorteilhafte Ausgestaltung besteht ferner darin, dass die als Isolationskörperkonus ausgebildete erste Isolationskörperdichtfläche axial in mehrere Konusabschnitte unterteilt ist, wobei ein mittlerer Konusabschnitt den gleichen Konuswinkel gegenüber der Längsachse besitzt wie die Messstückdichtfläche und ein von dem Messstück abgekehrter innerer Konusabschnitt einen kleineren und ein dem Messstück zugekehrter äußerer Konusabschnitt einen größeren Konuswinkel besitzen. Die zum Messen relevante Oberfläche des Messstücks bleibt dabei unbeeinträchtigt.

Für den Einbau und die Abdichtung der Messelektrodeneinheit in einer Wandung ist vorteilhaft vorgesehen, dass der Befestigungsadapter mit einem Außengewinde an einem Gewindestück zum Einschrauben in ein Gegengewinde einer Wandung versehen ist und dass der Befestigungsadapter mit einer an einem Anschlagteil angeordneten Anschlagfläche zur Abdichtung an der Wandung versehen ist. In der Wandung ist zum Einbau der Messelektrodeneinheit als Gegenstück vorteilhaft ein entsprechend angepasster Aufnahmeflansch vorhanden.

Für den Aufbau und die Funktion der Messelektrodeneinheit sind des Weiteren die Merkmale von Vorteil, dass bei Vorhandensein nur einer Baugruppe der Befestigungsadapter, gegebenenfalls das Zwischenstück, der Isolationskörper, das Messstück und die Zugstange koaxial zur Längsachse angeordnet sind. Bei einer alternativen Ausbildung der Messelektrodeneinheit können einem gemeinsamen Befestigungsadapter auch mehr, z. B. zwei oder drei parallel zur Längsachse A und von dieser radial beabstandet verlaufende Baugruppen aus gegebenenfalls vorhandenem Zwischenstück, Isolationskörper, Messstück, Zugstange und Feder in genannter Weise über Dichtflächen angeschlossen sein, wobei die Komponenten der jeweiligen Baugruppe koaxial zueinander angeordnet sind.

Vorteile für den Aufbau ergeben sich auch dadurch, dass die Zugstange mit ihrem vorderen Endabschnitt in eine als Sackloch in dem Messstück ausgebildete Gewindebohrung eingeschraubt ist.

Eine für den Aufbau und die Funktion weitere vorteilhafte Ausgestaltung besteht darin, dass die Zugstange auch als Abschnitt der elektrischen Stromleitung, insbesondere Signalableitung oder einer Stromzuführung, genutzt ist. Die Zugstange ist dabei isoliert durch das Innere des (ohnehin isolierenden) Isolationskörpers, gegebenenfalls des Zwischenstücks, des Befestigungsadapters und weiterhin gegebenenfalls eines Abstandsteils und die Federanordnung geführt, beispielsweise mittels einer geeigneten Isolationsbeschichtung oder unter Wahrung eines Ringspalts zwischen den genannten Komponenten.

Eine vorteilhafte Ausgestaltung weist des Weiteren die Merkmale auf, dass der Befestigungsadapter und gegebenenfalls das Zwischenstück aus Metall und der Isolationskörper aus einer Keramik hergestellt sind, wobei das gegebenenfalls vorhandene Zwischenstück aus einem weicheren Metall, insbesondere Aluminium, als der Befestigungsadapter besteht.

Eine für die Messfunktion vorteilhafte Ausführung besteht z. B. darin, dass das Messstück zumindest im Oberflächenbereich eines Messteils aus Platin besteht.

Vorteilhaft ist die Verwendung einer Messelektrodeneinheit zum Einbau in der Wandung eines Rohrs oder eines Behälters einer thermochemischen Anlage mit flüssigem, elektrisch leitfähigem Wärmeträgermedium für elektrochemische Messungen.

Dabei besteht eine vorteilhafte Verwendung zur Bestimmung der Zusammensetzung oder Reinheit einer Salzschmelze.

Dabei ergeben sich insbesondere auch Vorteile bei einem Einsatz, der dadurch gekennzeichnet ist, dass die Messelektrodeneinheit bei einer Temperatur der Salzschmelze im Bereich von 280 °C und 800 °C verwendet wird.

Auch besteht eine vorteilhafte Verwendung darin, dass die Messelektrodeneinheit als Niveausensor oder Durchflusssensor eingesetzt ist.

Im vorliegenden Kontext bezieht sich der Begriff "vorne" bzw. seine sinnentsprechende Abwandlung auf den beim Einsatz dem Arbeitsmedium zugekehrten Teil der Messelektrodeneinheit und der Begriff "hinten" bzw. seine sinnentsprechende Abwandlung auf ihren beim Einsatz von dem Arbeitsmedium abgewandten Teil.

Die Erfindung wird nachfolgend anhand von Ausführungsbeispielen unter Bezugnahme auf die Zeichnungen näher erläutert. Es zeigen:
- Fig. 1: wesentliche Abschnitte einer erfindungsgemäßen Messelektrodeneinheit in seitlicher Ansicht,
- Fig. 2: eine vergrößerte Darstellung eines mittleren Abschnitts der Messelektrodeneinheit in seitlicher Ansicht,
- Fig. 3: einen vorderen, in einem Messbereich liegenden Abschnitt der Messelektrodeneinheit in seitlicher Darstellung,
- Fig. 4: den vorderen Bereich der Messelektrodeneinheit bei auseinandergezogenem Messstück und Isolationskörper, insbesondere Keramikkörper, mit unterschiedlichen Steigungswinkeln von Konusabschnitten,
- Fig. 5: ein weiteres Ausführungsbeispiel eines Befestigungsadapters der Messelektrodeneinheit,
- Fig. 6: ein Diagramm zur Abhängigkeit der Leckrate von der Flächenkraft für verschiedene Materialien und
- Fig. 7: ein Diagramm zur Abhängigkeit der Leckrate von der Temperatur für zwei verschiedene Materialien.

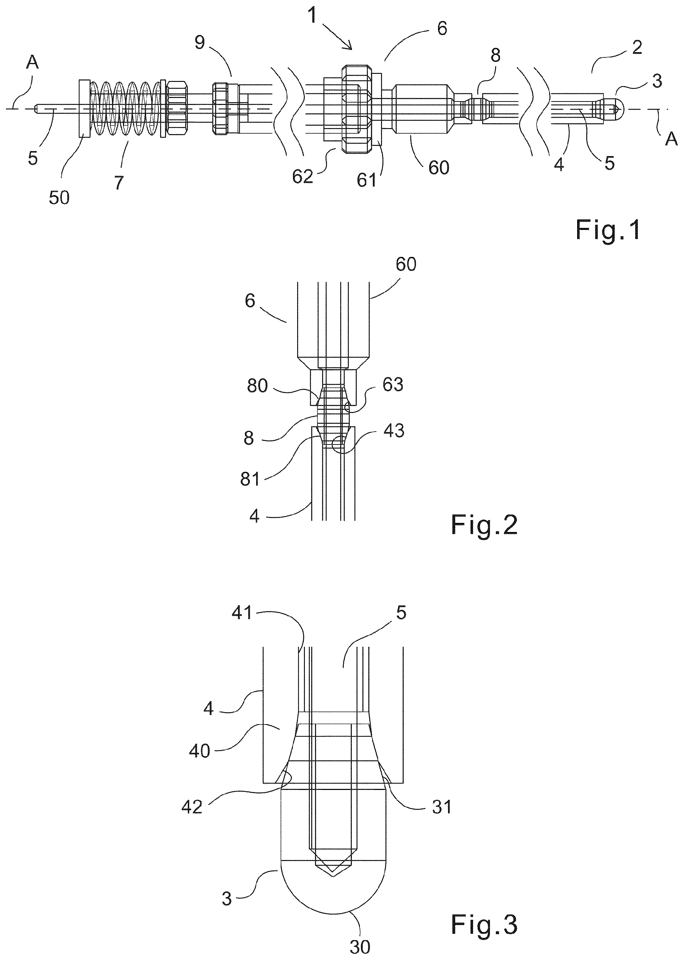

Die Fig. 1 zeigt ein Ausführungsbeispiel einer Messelektrodeneinheit 1, die zum Einbau in eine (nicht gezeigte) Wandung eines Behälters oder einer Rohrleitung ausgebildet ist, in welcher ein Arbeitsmedium, insbesondere eine Salzschmelze, etwa ein geschmolzenes anorganisches Salz, bei hoher Temperatur im Bereich von z. B. 280 °C bis 800 °C enthalten bzw. geführt ist. Derartige Arbeitsmedien in Form von Salzschmelzen werden z. B. in thermischen Wärmespeichersystemen als Wärmeträger verwendet.

Die länglich ausgebildete, sich entlang einer Längsachse A erstreckende Messelektrodeneinheit 1 weist einen in der Wandung z. B. mittels einer Schraubverbindung festlegbaren Befestigungsabschnitt in Form eines Befestigungsadapters 6 auf, an den sich nach vorne zu dem das Arbeitsmedium enthaltenden Hohlraum des Behälters bzw. der Rohrleitung hin ein Isolationskörper 4, insbesondere aus elektrisch isolierender Keramik, und ein an dessen vorderem Bereich in einem Vorderabschnitt 2 angesetztes Messstück 3 mit für die Messung geeigneter Oberfläche in einem Messteil 30 (s. Fig. 3) anschließen. Zwischen dem Isolationskörper 4 und dem vorderen Endbereich des Befestigungsadapters 6 ist vorliegend ein Zwischenstück 8 angeordnet. Sowohl der Befestigungsadapter 6 als auch das Zwischenstück 8 bestehen aus einem Metall, wobei das Zwischenstück 8 vorzugsweise aus einem anderen, insbesondere weicheren Metallmaterial ausgebildet ist als der Befestigungsadapter 6. Im hinteren Bereich des Befestigungsadapters 6, der im eingebauten Zustand der Außenseite der Wandung zugekehrt ist bzw. über diese hinaus vorstehen kann, schließt sich ein Abstandsteil 9 an, der mit einer eine Feder 7 aufweisenden Federanordnung versehen ist. Der Isolationskörper 4, das Zwischenstück 8, der Befestigungsadapter 6 und das Abstandsteil 9 sind jeweils mit einer koaxialen Durchgangsbohrung versehen, und durch die gesamte Anordnung der genannten Komponenten erstreckt sich vom Vorderabschnitt 2 bis zum Abstandsteil 9 und vorliegend etwas darüber hinaus ein als Zugstange 5 dienender zentraler stabförmiger Körper, der durch die jeweiligen Durchgangsbohrungen geführt ist. Dabei ist die Zugstange 5 an ihrem vorderen Endabschnitt an dem Messstück 3 unverschieblich befestigt, z. B. über eine Gewindeanordnung verschraubt. Die Zugstange 5 ist im Übrigen verschieblich und vorzugsweise konzentrisch entlang der Längsachse A durch die jeweiligen Durchgangsbohrungen geführt und nicht nur gegenüber dem ohnehin isolierenden Isolationskörper 4, sondern auch gegenüber dem Zwischenstück 8, dem Befestigungsadapter 6 und dem Abstandsteil 9 sowie auch der Feder 7 elektrisch isoliert, wobei sie vorliegend vorteilhaft gleichzeitig als Signalableitung von dem Messstück 3 zu einer (nicht gezeigten) Auswerteeinrichtung über erforderliche weitere Leitungsabschnitte genutzt ist. Denkbar wäre auch eine von der Zugstange 5 separate Signalableitung. Das Messstück 3, der Isolationskörper 4, das vorliegend (aber nicht zwingend) vorhandene Zwischenstück 8, sowie die Zugstange 5 und Feder 7 bilden eine koaxial zusammengesetzte Baugruppe, die an dem Befestigungsadapter 6 der Messelektrodeneinheit 1 gehalten und mittels diesem in der Wandung eines Behälters oder einer Rohrleitung einbaubar ist.

Die im eingebauten Zustand auf der Innenseite der Wandung liegenden Übergangsbereiche zwischen dem Befestigungsadapter 6 und vorliegend dem Zwischenstück 8, zwischen diesem und dem Isolationskörper 4 und vorliegend auch zwischen dem Isolationskörper 4 und dem Messstück 3 sind als Dichtflächen derart verschieblich gegeneinander ausgebildet, dass sie auch bei Temperaturänderungen in den hohen Temperaturbereichen von z. B. Salzschmelzen ihre Dichtfunktion zuverlässig aufrechterhalten. Dies wird durch eine konische Ausbildung der jeweiligen Dichtflächen, nämlich der dem Zwischenstück 8 zugekehrten Adapterdichtfläche 63, der daran komplementär angepassten ersten Dichtfläche 80 des Zwischenstücks 8, der an dessen vorderem Endbereich angeordneten zweiten Dichtfläche 81, der daran wiederum komplementär angepassten zweiten Isolationskörperdichtfläche 43, der am vorderen Endbereich des Isolationskörpers 4 angebrachten ersten Isolationskörperdichtfläche 42 und der dieser zugekehrten, dazu komplementär ausgebildeten Messstückdichtfläche 31 erreicht. Dabei sind die Adapterdichtfläche 63 beispielsweise als Innenkonus, die erste Dichtfläche 80 des Zwischenstücks 8 und dessen zweite Dichtfläche 81 als Außenkonus, die zweite Isolationskörperdichtfläche 43 sowie die erste Isolationskörperdichtfläche 42 als Innenkonus und die Messstückdichtfläche 31 wiederum als Außenkonus ausgebildet. Denkbar wäre auch ein unmittelbarer Übergang zwischen der Adapterdichtfläche 63 zu der zweiten Isolationskörperdichtfläche 43 und/oder eine (wegen Wärmeeinflüssen jedoch ungünstigere) stoffschlüssige Verbindung zwischen dem Isolationskörper 4 und dem Messstück 3.

In Fig. 2 ist der genannte (mittelbare) Übergangsbereich von dem Befestigungsadapter 6 zu dem Isolationskörper 4 mit dem dazwischen angeordneten Zwischenstück 8 und den genannten Dichtflächen vergrößert dargestellt.

Die Fig. 3 zeigt den Vorderabschnitt 2 der Messelektrodeneinheit 1 mit dem Übergangsbereich zwischen dem Isolationskörper 4 und dem Messstück 3 mit den dortigen Dichtflächen und dem Messteil 30 sowie einen in eine Gewindebohrung 32 des Messstücks 3 eingeschraubten vorderen Endabschnitt der Zugstange 5. Ersichtlich sind auch die Durchgangsbohrung 41 des Isolationskörpers 4 und dessen insbesondere aus Keramikmaterial bestehende Isolatorwand 40.

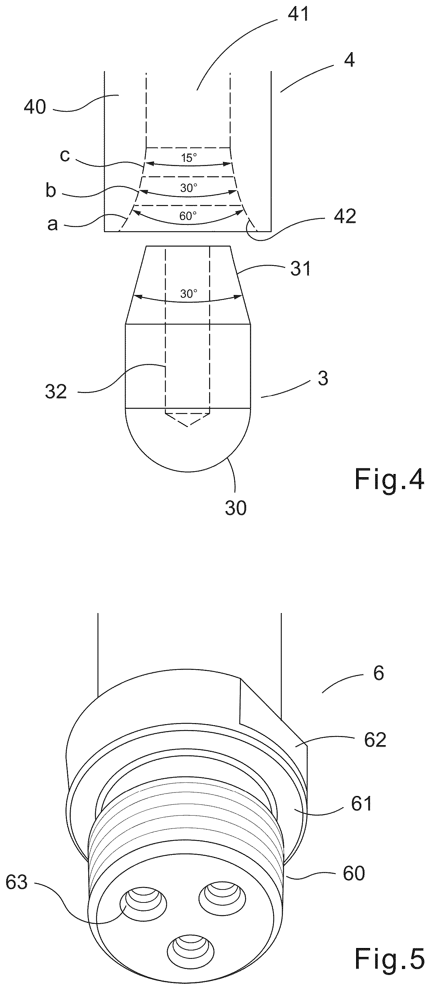

Wie Fig. 4 zeigt, ist die als Innenkonus ausgebildete erste Isolationskörperdichtfläche 42 in mehrere Abschnitt unterteilt, deren Öffnungswinkel gegenüber der Längsachse A (vgl. Fig. 1) von innen zur vorderen Stirnseite hin zunehmen, nämlich einen (inneren) dritten Konusabschnitt c, einen (mittleren) zweiten Konusabschnitt b und einen (äußeren bzw. vorderen) ersten Konusabschnitt a, wobei der dritte Konusabschnitt c z. B. 15°, der zweite Konusabschnitt b z. B. 30° und der erste Konusabschnitt a z. B. 60° betragen. Der Öffnungswinkel der Messstückdichtfläche 31 bzw. des betreffenden Außenkonus ist vorteilhaft an den zweiten Konusabschnitt b angepasst und beträgt entsprechend ebenfalls 30°. Die so miteinander zusammenwirkenden Dichtflächen des Messstücks 3 und des Isolationskörpers 4 ergeben eine vorteilhafte Abdichtung und Funktion, wobei der Messteil 30 mit dem zweckentsprechend angepassten Elektrodenmaterial, wie z. B. Platin, unbeeinträchtigt bleibt. Die Kontaktfläche zwischen dem zweiten Konusabschnitt b und dem Außenkonus des Messstücks 3 beträgt z. B. 0,12 cm². Auf genannte Weise werden Übergangskanten von der vorderseitigen Stirnfläche des Isolationskörpers 4 zu dem anschließenden Innenkonus und von dem Innenkonus zur inneren Zylinderwand der Durchgangsbohrung abgeflacht. Diese oder eine ähnliche abgeflachte Ausbildung verhindert das Bilden eines Grats auf der Oberfläche des Außenkonus des Messstücks 3. Ein Grat würde die Bewegungsfreiheit des Messstücks 3 mit dem Außenkonus bzw. der Messstückdichtfläche 31 behindern. Falls sich das Messstück 3 mit seinem Außenkonus bei unterschiedlich starker Ausdehnung infolge Temperatureinflüssen nicht mehr axial verschieben kann, könnte es zu Leckagen kommen.

Auch für die Öffnungswinkel bzw. Konuswinkel der weiteren Innen- und Außenkonusse hat sich ein Winkel im Bereich um 30°, z. B. zwischen 20° und 45°, als vorteilhaft für die Dichtfunktion bei Ausdehnung durch Temperatureinflüsse erwiesen. Zum Einbau in die Wandung eines Behälters bzw. Rohrs, beispielsweise in einen dort für den Einbau vorhandenen Einbauflansch, weist der Befestigungsadapter 6 als Einschraubadapter ein Gewindestück 60 mit einem Außengewinde auf, welches in ein angepasstes Innengewinde an der Wandung bzw. dem Einbauflansch eingedreht wird. Zum Dichten an der Wandung ist an dem Befestigungsadapter 6 vorteilhaft ein flanschartiges bzw. bundartiges Anschlagteil 61 vorhanden. Mittels eines auf der Außenseite der Messelektrodeneinheit 1 angeordneten, an dem Befestigungsadapter 6 angebrachten Werkzeugansatzes 62 kann die mittels der Zugstange 5 unter Presskraft mittels der Feder 7 zusammengehaltene Messelektrodeneinheit 1 einfach in die Wandung eingebaut werden.

Die Feder 7 stützt sich unter Vorspannung mit ihrer dem Befestigungsadapter 6 zugekehrten Stirnseite an einem Widerlager des Befestigungsadapters 6 oder des Abstandsteils 9 und mit ihrer von dem Befestigungsadapter 6 abgewandten Stirnseite an einem an der Zugstange 5 fest angebrachten Anschlag 50 ab. Die Zugstange 5, die mit ihrem vorderen Endabschnitt fest mit dem Messstück 3, insbesondere über die Gewindebohrung 32, verbunden ist, besitzt einen isolierenden Mantel und/oder ist unter umlaufendem Abstand durch die jeweiligen Durchgangsbohrungen geführt. Die Feder 7 ist so zwischen dem Widerlager und dem Anschlag 60 gespannt eingebracht, dass die miteinander zusammenarbeitenden Dichtflächen, vorliegend der miteinander zusammenwirkenden Innen- und Außenkonusflächen, beim Zusammenziehen und Ausdehnen infolge Temperatureinflüssen auf die genannten Komponenten stets mit genügender Presskraft zur Abdichtung aneinandergehalten werden. Bei der genannten Ausbildung der jeweiligen Dichtflächen kommt außer dem Messteil 30 des Messstücks 3 nur die Außenseite des Isolationskörpers 4 bzw. des Keramikkörpers und der metallische Übergangsbereich zu dem Befestigungsadapter, vorliegend dessen vorderer Metallabschnitt und das Zwischenstück 8 mit dem Arbeitsmedium, beispielsweise der Salzschmelze, in Kontakt. Parasitäre elektrische Spannungen oder selektives Auflösen können/kann hierbei nicht auftreten. Von dem Messstück 3 kommt ausschließlich der Messteil 30 bzw. dessen zum Messen relevante Oberfläche aus Elektrodenmaterial, wie z. B. Platin, mit dem Arbeitsmedium in Kontakt. Die elektrische Anbindung hinter dem dichtenden Konusübergang kommt nicht mit dem Arbeitsmedium in Kontakt und kann daher aus anderen Materialien aufgebaut sein.

Der Isolationskörper 4 ist vorteilhaft als Keramikrohr, z. B. mit einem Außendurchmesser im Bereich von 6 mm bis 8 mm, vorzugsweise um 8 mm, und einem Innendurchmesser von z. B. 3 mm ausgebildet. Das Zwischenstück 8 ist z. B. aus Aluminium gefertigt, und bildet somit ein Anpassstück zwischen dem Keramikrohr und dem metallischen Befestigungsadapter 6. Alle Komponenten der Messelektrodeneinheit 1 sind vorzugsweise konzentrisch zu der Längsachse A angeordnet, wobei die mittels der Federkraft der vorgespannten Feder 7 zusammengezogenen Komponenten koaxial zueinander angeordnet sind.

Bei alternativer Ausgestaltung könnte das Zwischenstück 8 auch weggelassen werden und an dem Befestigungsadapter 6 könnte ein mit der zweiten Isolationskörperdichtfläche 43 in Form des Innenkonus dichtend zusammenwirkender Außenkonus vorhanden sein. Da sich der Befestigungsadapter 6 an dem Anlagenflansch in einer Zone niedrigerer Temperatur befindet, ist jedoch das Zwischenstück 8, insbesondere aus Aluminium, mit der ersten und der zweiten Dichtfläche 80, 81, vorliegend ausgebildet als beiderseitige Außenkonusse, von Vorteil. Das Aluminium ist weicher und dichtet daher bei niedrigeren Temperaturen bzw. geringeren Anpressdrücken besser ab.

Wie Fig. 5 zeigt, können in alternativer Ausgestaltung der Messelektrodeneinheit 1 an dem Befestigungsadapter 6 auch mehr als eine Baugruppe aus Messstück 3, Isolationskörper 4, gegebenenfalls vorhandenem Zwischenstück 8, Zugstange 5 und Feder 7 in entsprechender Weise, wie anhand des vorherigen Ausführungsbeispiels mit nur einer solchen Baugruppe beschrieben, dicht angebracht werden. Hierbei sind in dem vorderen Abschnitt des Befestigungsadapters 6, und zwar dem Gewindestück 60, beispielhaft drei konusförmige Adapterdichtflächen 63 parallel zur Längsachse A verlaufend und radial von dieser beabstandet angeordnet, wobei sich an jede Adapterdichtfläche 63 eine jeweilige parallel zur Längsachse A verlaufende Durchgangsbohrung zur Durchführung der zugehörigen Zugstange 5 nach hinten anschließt. Der Aufbau der jeweiligen in die Adapterdichtfläche 63 einzusetzenden Baugruppe entspricht prinzipiell demjenigen des zuvor beschriebenen Ausführungsbeispiels.

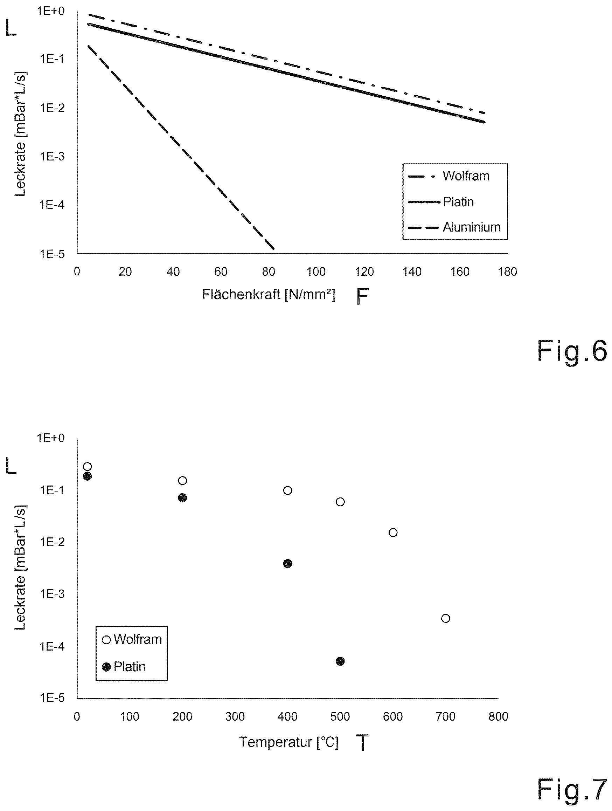

Fig. 6 zeigt ein Diagramm zur Abhängigkeit der Leckrate L in Abhängigkeit von der Flächenkraft F für Wolfram (Strich-Punk-Linie), Platin (durchgezogene Linie) und Aluminium (unterbrochene Linie) bei Raumtemperatur. Es zeigt sich, dass mit dem relativ weichen Aluminium bereits bei Raumtemperatur und moderater Anpresskraft eine sehr gute Dichtheit erreicht werden kann. Um bei Materialien wie Platin oder Wolfram eine sehr gute Dichtheit zu erreichen, muss die Temperatur erhöht werden.

Die Fig. 7 zeigt den Verlauf der Leckrate in Abhängigkeit von der Temperatur bei konstanter Anpresskraft von 42 N/mm². Um eine Presskraft von 42 N/mm² bei Temperaturen von 300 °C bis 700 °C auf die Konusdichtfläche übertragen zu können, ist in einem Aufbau, wie in Fig. 1 gezeigt, eine Zugstange aus Alloy X750 / 2.4669 von Vorteil bzw. notwendig, da die 0,2 % Dehngrenze der Zugstange 5 sonst überschritten würde. Nach der Wärmebehandlung einer Platinelektrode bei 600 °C zeigt diese abgekühlt auf Raumtemperatur eine Leckrate 1x10⁻⁴ mBar*L/s. Die durch die Wärmebehandlung erzielte Dichtheit bleibt also beim Abkühlen weitestgehend erhalten.

Messelektrodeneinheiten des hier vorgestellten erfindungsgemäßen Aufbaus sind in solarthermischen oder anderen thermischen Anlagen mit flüssigem, elektrisch leitfähigem Wärmeträgermedium für elektrochemische Messungen oder als Niveausensor oder Durchflusssensor einsetzbar, beispielsweise auch in der chemischen Industrie.

## Patentansprüche

1. Messelektrodeneinheit (1) mit einem um eine Längsachse (A) umlaufenden länglichen Aufbau zum Einbau in die Wandung eines Behälters oder einer Rohrleitung zur Messung an darin enthaltenen Arbeitsmedien, insbesondere Salzschmelzen, mit einem Befestigungsabschnitt zum Befestigen der Messelektrodeneinheit (1) an der Wandung und mindestens einer koaxial zusammengesetzten Baugruppe aus einem in das Arbeitsmedium eintauchbaren am vorderen Endbereich angebrachten Messstück (3), einem dieses im eingebauten Zustand gegenüber der Wandung elektrisch isolierenden Isolationskörper (4), und mit einer mit dem Messstück (3) elektrisch verbundenen Signalableitung zum Weiterleiten von Messsignalen an eine Auswerteeinrichtung, **dadurch gekennzeichnet,**
**dass** der Befestigungsabschnitt als Befestigungsadapter (6) für jede Baugruppe mit einer um die oder - bei mehreren Baugruppen - parallel zu der Längsachse (A) umlaufenden, sich mit einer radialen Komponente erstreckenden, insbesondere konusförmigen, Adapterdichtfläche (63) ausgebildet ist, die mit einer zugekehrten umlaufenden, eine radiale Komponente aufweisenden, insbesondere konusförmigen, komplementären ersten Dichtfläche (80) eines Zwischenstücks (8) der jeweiligen Baugruppe oder unmittelbar mit einer zweiten Isolationskörperdichtfläche (43) formschlüssig, relativ verschiebbar dichtend zusammenwirkt, wobei bei Vorhandensein des Zwischenstücks (8) dieses an seinem von der zugeordneten Adapterdichtfläche (63) abgelegenen Endbereich mit einer der zweiten Isolationskörperdichtfläche (43) zugekehrten, umlaufenden, eine radiale Komponente aufweisenden, insbesondere konusförmigen, komplementären zweiten Dichtfläche (81) relativ verschiebbar dichtend zusammenwirkt, sodass das Messstück (3) im Einbauzustand von der Wandung auch bei sich ändernder Temperatur elektrisch isoliert bleibt, wobei der Isolationskörper (4) und der Befestigungsabschnitt (6) sowie gegebenenfalls das Zwischenstück (8) mittels einer Presskraft in Richtung der Längsachse (A) dichtend zusammengehalten sind.

2. Einbauelektrodeneinheit (1) nach Anspruch 1,
**dadurch gekennzeichnet,**
**dass** der Isolationskörper (4) in seinem dem Messstück (3) zugekehrten Endbereich mit einer ersten Isolationskörperdichtfläche (42) versehen ist, die mit einer zugekehrten, umlaufenden, eine radiale Komponente aufweisenden, insbesondere konischen, komplementären Messstückdichtfläche (31) relativ verschiebbar dichtend zusammenwirkt, wobei auch das Messstück (3) und der Isolationskörper (4) mittels einer Presskraft in Richtung der Längsachse (A) dichtend zusammengehalten sind.

3. Messelektrodeneinheit (1) nach Anspruch 1 oder 2,
**dadurch gekennzeichnet,**
**dass** für die oder gegebenenfalls für jede weitere Baugruppe der aus elektrisch leitendem Material, insbesondere Metall, hergestellte Befestigungsadapter (6), der Isolationskörper (4) und gegebenenfalls das Zwischenstück (8) von einer Zugstange (5) relativ zu dieser in Richtung der Längsachse (A) verstellbar und elektrisch isoliert durchsetzt sind, an deren vorderem Endbereich das Messstück (3) befestigt ist und die mit ihrem anderen Ende in den oder über den Befestigungsadapter (6) hinaus ragt, und
**dass** die Presskraft zum dichtenden Zusammenhalten des Befestigungsadapters (6), gegebenenfalls des Zwischenstücks (8) und des Isolationskörpes (4) sowie - bei Ausbildung nach Anspruch 2 - auch des Messstücks (3) mittels einer Federanordnung aufgebracht ist, die sich mit ihrem einen Ende an einem Anschlag am hinteren Endbereich der Zugstange (5) und andererseits an dem Befestigungsadapter (6) oder einem sich an diesen nach hinten anschließenden Abstandsteil (9) abstützt.

4. Messelektrodeneinheit (1) nach einem der vorhergehenden Ansprüche,
**dadurch gekennzeichnet,**
**dass** die jeweilige Adapterdichtfläche (63) mittels eines Innenkonus, die erste und die zweite Dichtfläche (80, 81) des Zwischenstücks (8) mittels Außenkonusse, die gegebenenfalls vorhandene erste und die zweite Isolationskörperdichtfläche (42, 43) mittels Innenkonusse und die gegebenenfalls vorhandene Messstückdichtfläche (31) mittels eines Außenkonus gebildet sind.

5. Messelektrodeneinheit (1) nach Anspruch 4,
**dadurch gekennzeichnet,**
**dass** die als Isolationskörperkonus ausgebildete erste Isolationskörperdichtfläche (42) axial in mehrere Konusabschnitte (a, b, c) unterteilt ist, wobei ein mittlerer Konusabschnitt (b) den gleichen Konuswinkel gegenüber der Längsachse (A) besitzt wie die Messstückdichtfläche (31) und ein von dem Messstück (3) abgekehrter innerer Konusabschnitt (c) einen kleineren und ein dem Messstück (3) zugekehrter äußerer Konusabschnitt (a) einen größeren Konuswinkel besitzen.

6. Messelektrodeneinheit (1) nach einem der vorhergehenden Ansprüche,
**dadurch gekennzeichnet,**
**dass** der Befestigungsadapter (6) mit einem Außengewinde an einem Gewindestück (60) zum Einschrauben in ein Gegengewinde einer Wandung versehen ist und
**dass** der Befestigungsadapter (6) mit einer an einem Anschlagteil (61) angeordneten Anschlagfläche zur Abdichtung an der Wandung versehen ist.

7. Messelektrodeneinheit (1) nach einem der Ansprüche 3 bis 6,
**dadurch gekennzeichnet,**
**dass** bei Vorhandensein nur einer Baugruppe der Befestigungsadapter (6), gegebenenfalls das Zwischenstück (8), der Isolationskörper (4), das Messstück (3) und die Zugstange (7) koaxial zur Längsachse (A) angeordnet sind.

8. Messelektrodeneinheit (1) nach einem der Ansprüche 3 bis 7,
**dadurch gekennzeichnet,**
**dass** die Zugstange (5) mit ihrem vorderen Endabschnitt in eine als Sackloch in dem Messstück (3) ausgebildete Gewindebohrung (32) eingeschraubt ist.

9. Messelektrodenanordnung (1) nach einem der Ansprüche 3 bis 8,
**dadurch gekennzeichnet,**
**dass** die Zugstange (7) auch als Abschnitt einer elektrischen Stromleitung, insbesondere der Signalableitung oder einer Stromzuführung, genutzt ist.

10. Messelektrodeneinheit (1) nach einem der vorhergehenden Ansprüche,
**dadurch gekennzeichnet,**
**dass** der Befestigungsadapter (6) und gegebenenfalls das Zwischenstück (8) aus Metall und der Isolationskörper (4) aus einer Keramik hergestellt sind, wobei das gegebenenfalls vorhandene Zwischenstück aus einem weicheren Metall, insbesondere Aluminium, als der Befestigungsadapter (6) besteht.

11. Messelektrodeneinheit (1) nach einem der vorhergehenden Ansprüche,
**dadurch gekennzeichnet,**
**dass** das Messstück (3) zumindest im Oberflächenbereich eines Messteils (30) aus Platin besteht.

12. Verwendung einer Messelektrodeneinheit (1) nach einem der vorhergehenden Ansprüche zum Einbau in der Wandung eines Rohrs oder eines Behälters einer thermochemischen Anlage mit flüssigem, elektrisch leitfähigem Wärmeträgermedium für elektrochemische Messungen.

13. Verwendung nach Anspruch 12 zur Bestimmung der Zusammensetzung oder Reinheit einer Salzschmelze.

14. Verwendung nach Anspruch 13,
**dadurch gekennzeichnet,**
**dass** die Messelektrodeneinheit (1) bei einer Temperatur der Salzschmelze im Bereich von 280 °C und 800 °C verwendet wird.

15. Verwendung nach einem der Ansprüche 12 bist 14, bei der die Messelektrodeneinheit (1) als Niveausensor oder Durchflusssensor eingesetzt ist.
